# EUROPEAN PATENT APPLICATION

(11) **EP 1 816 812 A1**
(43) Date of publication of application: **08.08.2007**
(21) Application number: 05811793.8
(22) Date of filing: 05.12.2005
(51) Int. Cl.: H04L 12/66, H04L 12/56

(54) **ACCESS CONTROL DEVICE, AND ACCESS CONTROL METHOD**

(30) Priority: 22.12.2004 JP 2004372230
(71) Applicant: Matsushita Electric Industrial Co., Ltd., Kadoma-shi, Osaka 571-8501 (JP)
(72) Inventor: KAMIKURA, Atsushi Matsushita Electric Industrial Co.Ltd, Chuo-ku, Osaka-shi, Osaka 540-6319 (JP); HASHIMOTO, Yuji Matsushita Electric Industrial Co.Ltd, Chuo-ku, Osaka-shi, Osaka 540-6319 (JP); IIDA, Kenichiro Matsushita Electric Industrial Co.Ltd, Chuo-ku, Osaka-shi, Osaka 540-6319 (JP); TAMURA, Tomofumi Matsushita Electric Industrial Co.Ltd, Chuo-ku, Osaka-shi, Osaka 540-6319 (JP); IINO, Satoshi Matsushita Electric Industrial Co.Ltd, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/022306
(87) International publication number: WO 2006/067951

(57) **Abstract**

An access control unit and an access control method are provided for controlling an access to a secure host efficiently by reducing the consumption of resources such as a memory. In this access control device, an access control unit (302) performs an access control in accordance with whether the target IP address and the sender IP address of a packet are the IP address of a secure terminal or host or the IP address of a general terminal or host, while referring to a host list stored in a host information storage unit (304). The host information storage unit (304) stores the domain name and the IP address of a general host in an external network (200), as the host list. A host list updating unit (305) inquires the host list of the host information storage unit (304) whether the unregistered host is the secure host or the general host, and updates the host list in accordance with the result of the inquiry.

## Description

### Technical Field

The present invention relates to an access control apparatus and access control method, and more particularly, an access control apparatus and access control method in a network where access from a terminal in an internal network is restricted according to the type of a host in an external network.

### Background Art

Conventionally, a general network may be provided with a DNS (Domain Name System) server which performs name resolution between an IP address and a host name. In such a network, when, for example, a connection request is generated from a terminal in the internal network such as a LAN (Local Area Network) to a host in the external network including the Internet, for example, the terminal transmits the host name of the connecting destination to a specified DNS server. The DNS server searches the IP address which corresponds to the received host name and sends back the result to the terminal as a response. This allows the terminal in the internal network to know the IP address of the host in the external network with which the terminal is trying to make a connection and access to this host.

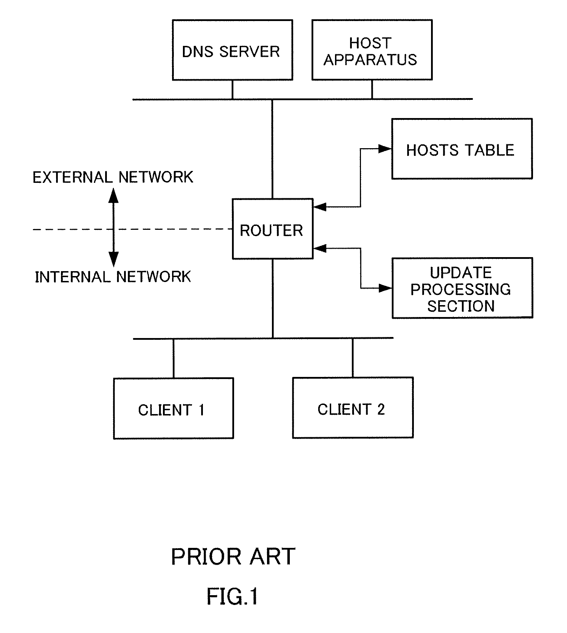

Such a technique of searching an IP address through a DNS is disclosed, for example, in Patent Document 1. In Patent Document 1, a router is provided at a boundary between the internal network and the external network as shown in FIG.1, and this router has a HOSTS table that records host names and IP addresses and an update processing section that manages and updates the HOSTS table.

In the network configuration in FIG.1, client 1 transmits a DNS request which requests name resolution to a DNS server in order to connect to a host. The DNS server transmits a DNS response to the DNS request to client 1, and at this time, the router stores a host name and an IP address included in the DNS response in the HOSTS table through the update processing section and then transfers the host name and the IP address to client 1. This allows client 1 to access to the host via the router.

Next, when a connection request is generated from client 2 to the host, client 2 transmits a DNS request to the DNS server as in the case of client 1. At this time, the router which is provided at the boundary between the internal network and the external network receives this DNS request and refers to the HOSTS table. Here, when the host name included in the DNS request is stored in the HOSTS table, the router does not transfer the DNS request to the DNS server and directly transmits a corresponding IP address in the HOSTS table to client 2.

In this way, according to the technique of Patent Document 1, the router caches the DNS response, and therefore it is possible to reduce the amount of DNS requests to be sent out to the external network and achieve traffic reduction. Furthermore, the router directly transmits the DNS response to the client, and therefore it is possible to enhance the DNS response speed.
Patent Document 1: Japanese Patent Application Laid-Open No.HEI 11-340984

### Disclosure of Invention

### Problems to be Solved by the Invention

By the way, the external network may be provided with, for example, two types of hosts: a secure host having secure contents, access to which is restricted, and a general host with no access restrictions. Furthermore, the internal network may be likewise provided with two types of terminals: a secure terminal which has already been authenticated and can connect to both the secure host and the general host, and a general terminal which can only connect to the general host.

In such a case, access from the general terminal to the secure host is not permitted, and therefore a connection request from the general terminal to the secure host leads to an increase in wasteful traffic in the network. In order to prevent such an increase in traffic, the router provided at the boundary between the internal network and the external network may perform access control, but the router needs to hold a list of all secure hosts to distinguish between access to the general host and access to the secure host.

However, when the router holds the list of all secure hosts, there is a problem of consuming a large amount of resources of a memory or the like. Furthermore, the host name and the IP address or the like of the secure host may change, and therefore it is necessary to manually update the list every time the network configuration changes. In this way, making the router hold the list of all secure hosts is inefficient and not realistic.

It is therefore an object of the present invention to provide an access control apparatus and access control method capable of reducing consumption of resources of a memory or the like and efficiently controlling access to a secure host.

### Means for Solving the Problem

The access control apparatus according to the present invention adopts a configuration including: a storage section that stores a host list indicating hosts, out of hosts in a first network, access to which is restricted or access to which is not restricted from a terminal in a second network; a reception section that receives a packet whose destination is set to a host in the first network from a terminal in the second network; a control section that controls, when the destination host of the received packet is registered in the host list, whether to transmit the packet to the host or discard the packet and; an updating section that acquires, when the destination host of the received packet is not registered in the host list, information as to whether or not access from the terminal to the host is permitted from outside and updates the host list.

The access control method according to the present invention is an access control method for an access control apparatus that stores a host list indicating hosts, out of hosts in a first network, access to which is restricted or access to which is not restricted from a terminal in a second network, the access control method including the steps of: receiving a packet whose destination is set to a host in the first network from a terminal in the second network; controlling, when the destination host of the received packet is registered in the host list, whether to transmit the packet to the host or discard the packet; and acquiring, when the destination host of the received packet is not registered in the host list, information as to whether or not access from the terminal to the host is permitted from outside and updating the host list.

According to this, when the destination of a received packet is registered in the host list, transmission or discarding of the packet is controlled, and, when the destination of the received packet is not registered in the host list, the host list is updated by acquiring information of the destination host from the outside. Therefore, a host list is created for only necessary destination hosts when necessary, and therefore it is not necessary to hold the list of all secure hosts, and it is possible to reduce consumption of resources of a memory or the like and efficiently control access to a secure host.

### Advantageous Effect of the Invention

According to the present invention, it is possible to reduce consumption of resources of a memory or the like and efficiently control access to a secure host.

### Brief Description of Drawings

FIG.1 shows an example of a conventional network configuration;
FIG.2 is a conceptual diagram showing an example of the network configuration according to an embodiment of the present invention;
FIG.3 is a block diagram showing the configuration of main parts of the gateway apparatus according to the embodiment;
FIG.4 shows an example of a terminal list according to the embodiment;
FIG.5A shows an example of a host list of general hosts according to the embodiment;
FIG. 5B shows an example of a host list of secure hosts according to the embodiment;
FIG.6 is a flowchart showing the operation of access control according to the embodiment;
FIG.7 is a sequence diagram showing a specific example of access control according to the embodiment;
FIG. 8 is a sequence diagram showing another specific example of access control according to the embodiment;
FIG.9 is a sequence diagram showing a further specific example of access control according to the embodiment;
FIG.10 is a flowchart showing the operation of other access control according to the embodiment; and
FIG.11 is a conceptual diagram showing another example of the network configuration according to the embodiment.

### Best Mode for Carrying Out the Invention

Hereinafter, an embodiment of the present invention will be explained in detail with reference to the accompanying drawings.

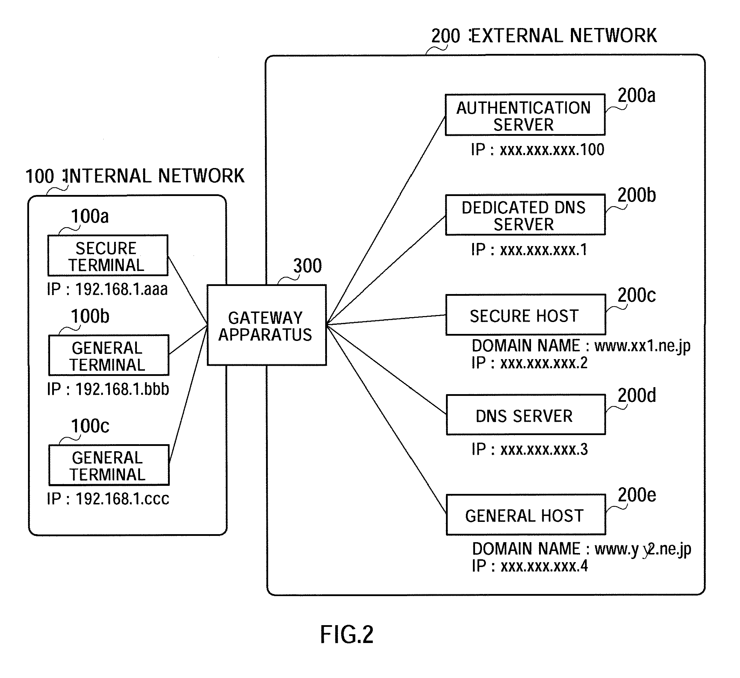

FIG.2 is a conceptual diagram showing an example of the network configuration according to an embodiment of the present invention. The network shown in the same figure is mainly configured with internal network 100 such as LAN, external network 200 including a public network such as the Internet and gateway apparatus 300 provided at a boundary between internal network 100 and external network 200.

Internal network 100 includes secure terminal 100a which has already been authenticated and can access to all hosts in external network 200 (IP address "192.168.1.aaa"), and general terminal 100b (IP address "192.168.1.bbb") and general terminal 100c (IP address "192.168.1.ccc") which can only access to general hosts in external network 200 with no access restrictions.

External network 200 includes authentication server 200a (IP address "xxx.xxx.xxx.100") that performs authentication of terminals in internal network 100, dedicated DNS server 200b (IP address "xxx.xxx.xxx.1") that performs name resolution about a secure host only accessible from a secure terminal in internal network 100, secure host 200c (IP address "xxx.xxx.xxx.2") having domain name "www.xx1.ne.jp" only accessible from a secure terminal in internal network 100, DNS server 200d (IP address "xxx.xxx.xxx.3") that performs name resolution about a general host accessible fromboth a secure terminal and a general terminal in internal network 100 and general host 200e (IP address "xxx.xxx.xxx.4") having domain name "www.yy2.ne.jp" accessible from both a secure terminal and a general terminal in internal network 100.

These terminals 100a to 100c in internal network 100 and servers/hosts 200a to 200e in external network 200 are connected through gateway apparatus 300.

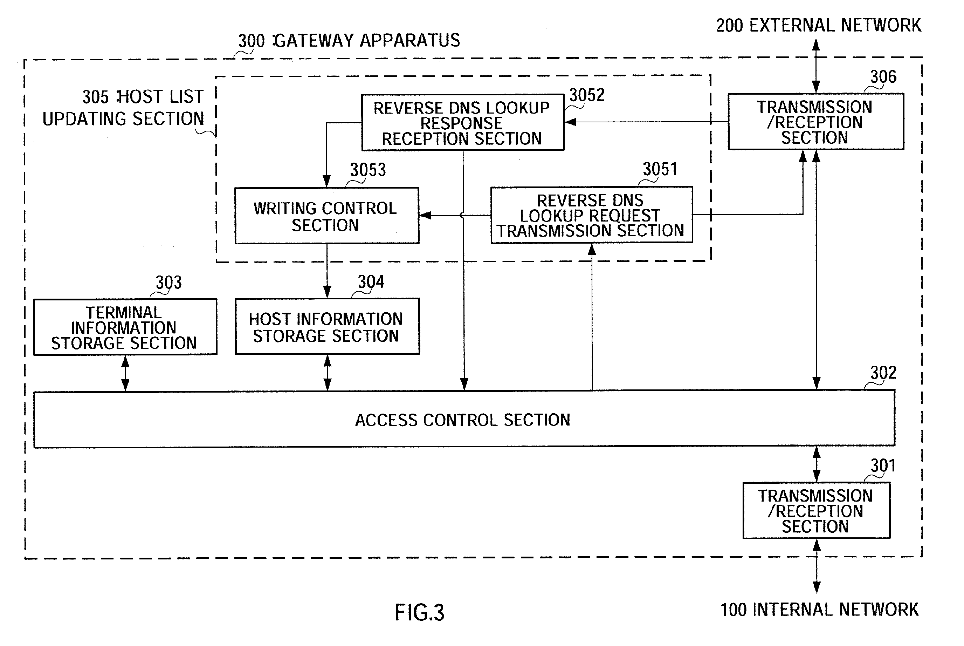

FIG. 3 is a block diagram showing the configuration of main parts of gateway apparatus 300 according to this embodiment. As shown in the same figure, gateway apparatus 300 is provided with transmission/reception section 301, access control section 302, terminal information storage section 303, host information storage section 304, host list updating section 305 and transmission/reception section 306. Furthermore, host list updating section 305 is provided with reverse DNS lookup request transmission section 3051, reverse DNS lookup response reception section 3052 and writing control section 3053.

Transmission/reception section 301 is connected to internal network 100, transmits/receives a packet to/from terminals 100a to 100c in internal network 100 and performs predetermined packet processing such as frame checking and frame assembly of a packet.

Access control section 302 controls access from internal network 100 to external network 200. At this time, access control section 302 performs access control according to whether the destination IP address or the transmission source IP address of the packet is the IP address of the secure terminal or the secure host, or the IP address of the general terminal or the host. Access control by access control section 302 will be explained in detail later.

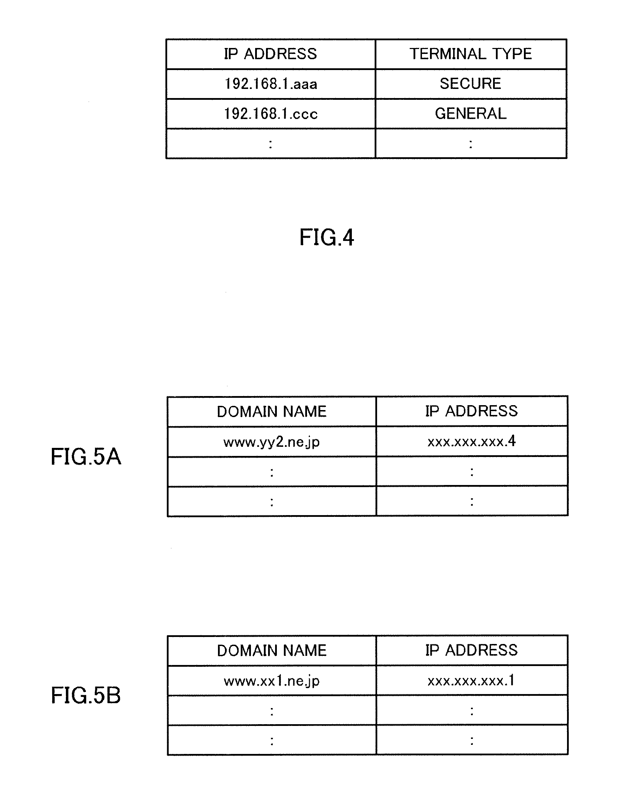

Terminal information storage section 303 holds a terminal list as shown, for example, in FIG.4. That is, terminal information storage section 303 stores information as to whether each terminal in internal network 100 is a secure terminal or a general terminal.

Host information storage section 304 stores a host list as shown, for example, in FIG.5A which is updated by host list updating section 305. That is, host information storage section 304 stores domain names and IP addresses of general hosts in external network 200. Host information storage section 304 may also store domain names and IP addresses of secure hosts in external network 200 as shown, for example, in FIG. 5B. In the following explanation, it is assumed that host information storage section 304 stores a host list of general hosts unless particularly specified.

Host list updating section 305 inquires whether a host which is not registered in the host list of host information storage section 304 is a secure host or a general host and updates the host list based on the inquiring result.

More specifically, when the destination IP address of the packet transmitted from internal network 100 is not registered in the host list of host information storage section 304, reverse DNS lookup request transmission section 3051 transmits a reverse DNS lookup request which inquires whether or not the host of this destination IP address is a secure host through transmission/reception section 306 according to an instruction of access control section 302.

Reverse DNS lookup response reception section 3052 receives a reverse DNS lookup response which is a response to the reverse DNS lookup request through transmission/reception section 306 and reports whether the inquired destination IP address is a secure host or a general host to writing control section 3053.

When the inquired destination IP address is the IP address of a general host, writing control section 3053 writes this destination IP address and a corresponding domain name in the host list of host information storage section 304.

Transmission/reception section 306 is connected to external network 200, transmits/receives a packet to/from servers/hosts 200a to 200e in external network 200 and performs predetermined packet processing such as frame checking and frame assembly of a packet.

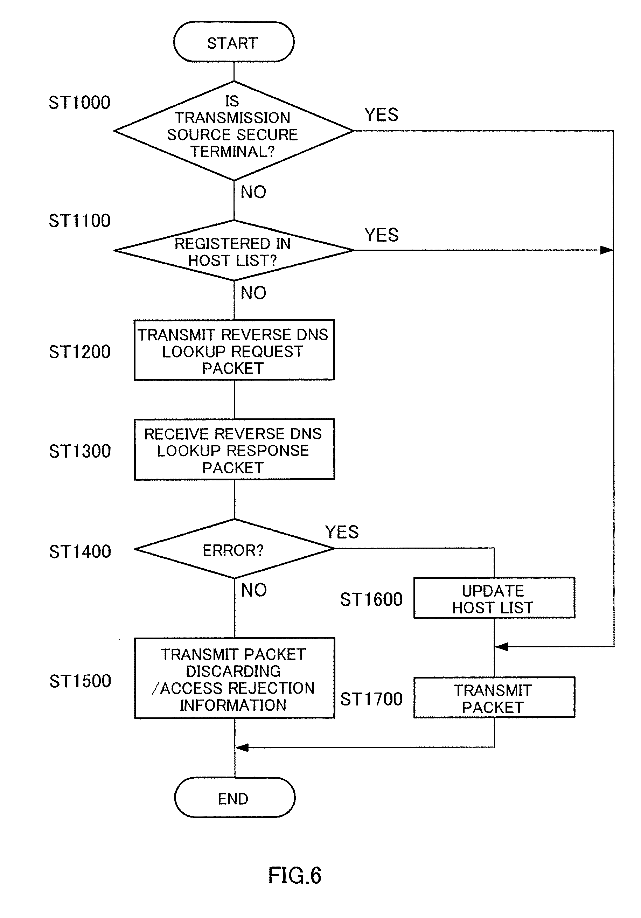

Next, access control by access control section 302 will be explained with reference to the flowchart shown in FIG. 6. Here, control over access from a terminal in internal network 100 to a host in external network 200 will be explained.

First, when a packet transmitted from a terminal in internal network 100 is received by transmission/reception section 301 of gateway apparatus 300, this packet is held by transmission/reception section 301, and the destination IP address and the transmission source IP address of the packet are reported to access control section 302. Access control section 302 then searches the transmission source IP address of the packet from the terminal list of terminal information storage section 303 and determines whether or not the transmission source terminal of the packet is a secure terminal (ST1000). As a result, when the transmission source of the packet is a secure terminal, access to both a secure host and a general host in external network 200 is permitted, and therefore access need not be restricted, and the packet is transmitted to the host of the destination IP address through transmission/reception section 306 (ST1700).

On the other hand, when the transmission source of the packet is a general terminal, the destination IP address of the packet is checked with the host list of host information storage section 304 and whether or not the destination of the packet is a general host is determined (ST1100). That is, when the destination IP address of the packet is already registered in the host list, the destination of this packet is determined to be a general host. In this case, access from a general terminal in internal network 100 to a general host in external network 200 is permitted, and therefore access is not restricted, and the packet is transmitted to the general host of the destination IP address through transmission/reception section 306 (ST1700).

On the other hand, when the destination IP address of the packet is not registered in the host list, whether the host of this destination IP address is a secure host or a general host is unknown, and therefore an instruction is transmitted to reverse DNS lookup request transmission section 3051 so as to transmit a reverse DNS lookup request of the destination IP address. In response to this instruction, reverse DNS lookup request transmission section 3051 transmits a reverse DNS lookup request inquiring whether or not the destination IP address of the packet is registered as the secure host to dedicated DNS server 200b in external network 200 through transmission/reception section 306 (ST1200). Furthermore, reverse DNS lookup request transmission section 3051 reports the inquired IP address to writing control section 3053.

The transmitted reverse DNS lookup request is received by dedicated DNS server 200b, and a reverse DNS lookup response indicating whether or not the host of the IP address included in the reverse DNS lookup request is registered in dedicated DNS server 200b is transmitted. Here, dedicated DNS server 200b performs name resolution about a secure host, and therefore, when the IP address of the reverse DNS lookup request is registered in dedicated DNS server 200b, the host of this IP address is determined to be a secure host. On the other hand, when the IP address of the reverse DNS lookup request is not registered in dedicated DNS server 200b, the host of this IP address is determined to be a general host.

This embodiment assumes that external network 200 is provided with dedicated DNS server 200b and DNS server 200d, but it is also possible to provide a server which has the functions of the dedicated DNS server and the DNS server. In this case, the server stores information as to whether each of the hosts in external network 200 registered in the server is a secure host or a general host. In the reverse DNS lookup response, the type of the host is mapped to a VLAN (Virtual LAN) tag ID and a TOS (Type Of Service) field of an Internet protocol, for example. Furthermore, the layer used to identify the type of the host may be an arbitrary layer.

When the result of the reverse DNS lookup shows that the IP address included in the reverse DNS lookup request is registered in the dedicated DNS server (that is, if the IP address is an IP address of a secure host), a hit is transmitted as a reverse DNS lookup response, and, when the IP address is not registered in the dedicated DNS server (that is, if the IP address is an IP address of a general host), an error is transmitted as the reverse DNS lookup response. The reverse DNS lookup response is transmitted to gateway apparatus 300 and received by reverse DNS lookup response reception section 3052 through transmission/reception section 306 (ST1300).

Reverse DNS lookup response reception section 3052 then determines whether or not the reverse DNS lookup response is an error (ST1400). In other words, reverse DNS lookup response reception section 3052 determines whether or not the inquired IP address is a secure host. When the determination result shows that the reverse DNS lookup response is a hit, the inquired IP address is an IP address of a secure host and access from the general terminal is not permitted, and therefore access control section 302 discards the packet held in transmission/reception section 301 and transmits access rejection information indicating that the access has been rejected to the transmission source of the packet through transmission/reception section 301 (ST1500).

Furthermore, when the determination result in ST1400 shows that the reverse DNS lookup response is an error, the inquired IP address is an IP address of a general host and such information is reported to writing control section 3053. Writing control section 3053 then newly adds the IP address reported from reverse DNS lookup request transmission section 3051 to the host list of general hosts stored in host information storage section 304. In this way, the host list of host information storage section 304 is updated (ST1600). Moreover, the transmitting destination of the packet is a general host, and therefore access from the general terminal is permitted, and the packet is transmitted from transmission/reception section 301 through transmission/reception section 306 (ST1700).

When a packet is transmitted from a terminal in internal network 100 to a host in external network 200 in this way, if the type of the host to which the packet is transmitted is unknown at gateway apparatus 300, by performing reverse DNS lookup for dedicated DNS server 200b in external network 200, a host list is updated as necessary, and transmission of the packet is controlled. By this means, it is not necessary for gateway apparatus 300 to store all secure hosts (or general hosts), and it is possible to obtain only information of necessary hosts when needed and reduce consumption of resources of a memory or the like.

Next, control over access from general terminal 100b in internal network 100 to a host in external network 200 will be explained with a specific example.

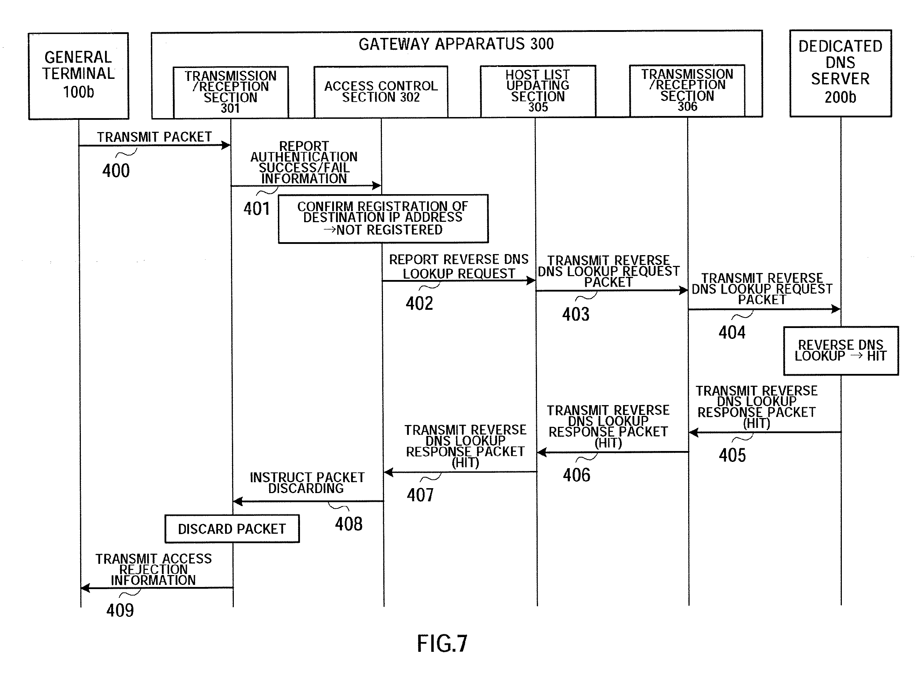

First, an example of the case will be explained with reference to the sequence diagram shown in FIG.7 where the destination IP address of a packet from general terminal 100b is not stored in host information storage section 304 of gateway apparatus 300 and the host of this destination IP address is a secure host.

First, a packet is transmitted from general terminal 100b to transmission/reception section 301 of gateway apparatus 300 (400). Transmission/reception section 301 reports authentication success/fail information including the destination IP address and the transmission source IP address of this packet to access control section 302 (401). Access control section 302 which has received the authentication success/fail information refers to the terminal list stored in terminal information storage section 303, determines that the transmission source IP address of the packet is the IP address of a general terminal, and then determines whether or not the destination IP address of the packet is registered in the host list stored in host information storage section 304. Here, the destination IP address of the packet is not registered in the host list, and whether this destination IP address is the IP address of a secure host or the IP address of a general host is unknown.

Therefore, access control section 302 outputs a reverse DNS lookup request report to reverse DNS lookup request transmission section 3051 in host list updating section 305 (402). A reverse DNS lookup request of the destination IP address is outputted from reverse DNS lookup request transmission section 3051 to transmission/receptionsection306 (403), and the reverse DNS lookup request is then transmitted to dedicated DNS server 200b (404). Dedicated DNS server 200b determines whether or not the IP address included in the reverse DNS lookup request is registered, but this IP address is the IP address of the secure host here, and therefore the IP address is registered in dedicated DNS server 200b, and a hit is sent back to transmission/reception section 306 as a reverse DNS lookup response (405).

The reverse DNS lookup response is then transferred from transmission/reception section 306 to reverse DNS lookup response reception section 3052 in host list updating section 305 (406), and, when reverse DNS lookup response reception section 3052 detects that the reverse DNS lookup response is a hit, such information is reported to access control section 302 (407). Since the reverse DNS lookup response is a hit, it is evident that the destination IP address of the packet is an IP address of a secure host and packet transmission from a general terminal is not permitted. Therefore, an instruction of discarding the packet is transmitted from access control section 302 to transmission/reception section 301 (408). When the packet is discarded by transmission/reception section 301 according to this instruction, access rejection information indicating that access to the destination IP address of the packet has been rejected is transmitted to general terminal 100b (409).

In this way, when the destination IP address of the packet from general terminal 100b is not stored in host information storage section 304 of gateway apparatus 300 and the host of this destination IP address is a secure host, the packet from general terminal 100b is discarded, and access to the secure host is rejected.

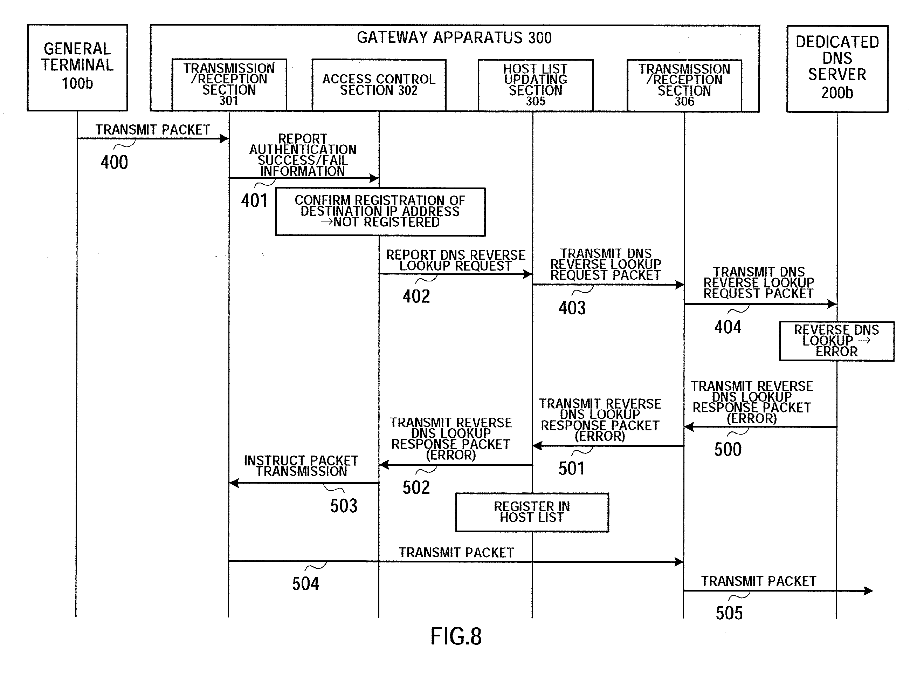

Next, an example of the case will be described with reference to the sequence diagram shown in FIG.8 where the destination IP address of the packet from general terminal 100b is not stored in host information storage section 304 of gateway apparatus 300 and the host of this destination IP address is a general host. In FIG.8, components that are the same as those in FIG.7 will be assigned the same reference numerals without further explanations.

First, as in the case of the example shown in FIG. 7, the destination IP address of the packet from general terminal 100b is not registered in the host list of host information storage section 304, and therefore a reverse DNS lookup request is transmitted to dedicated DNS server 200b (400 to 404). Dedicated DNS server 200b determines whether or not the IP address included in the reverse DNS lookup request is registered, but this IP address is the IP address of the general host, and therefore the IP address is not registered in dedicated DNS server 200b and an error is sent back to transmission/reception section 306 as a reverse DNS lookup response (500).

The reverse DNS lookup response is then transferred from transmission/reception section 306 to Reverse DNS lookup response reception section 3052 in host list updating section 305 (501), and, when reverse DNS lookup response reception section 3052 detects that the reverse DNS lookup response is an error, such information is reported to access control section 302 (502). Furthermore, when the reverse DNS lookup response is an error, the IP address included in the reverse DNS lookup request is an IP address of the general host, and therefore such information is reported from reverse DNS lookup response reception section 3052 to writing control section 3053, and the above-described IP address is registered in the host list stored in host information storage section 304 by writing control section 3053.

Moreover, the reverse DNS lookup response is an error, and therefore it is evident that the destination IP address of the packet is an IP address of the general host and transmission of the packet from the general terminal is permitted. Therefore, an instruction of packet transmission is transmitted from access control section 302 to transmission/reception section 301 (503). The packet is transferred from transmission/reception section 301 to transmission/reception section 306 according to this instruction (504), and the packet is transmitted from transmission/reception section 306 to the host of the destination IP address in external network 200 (505).

In this way, the destination IP address of the packet from general terminal 100b is not stored in host information storage section 304 of gateway apparatus 300, and, when the host of this destination IP address is a general host, a packet from general terminal 100b is transmitted to the general host of the destination IP address.

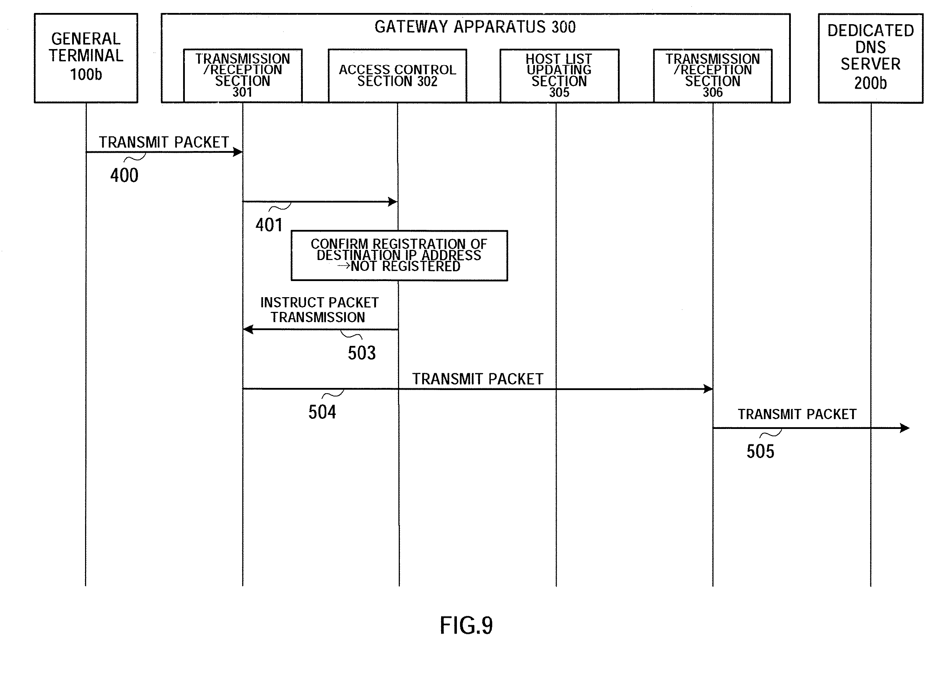

Next, an example of the case will be explained with reference to the sequence diagram shown in FIG.9 where the destination IP address of the packet from general terminal 100b is stored in host information storage section 304 of gateway apparatus 300. In FIG.9, components that are the same as those in FIG.7 and FIG.8 will be assigned the same reference numerals without further explanations.

First, as in the case of the example shown in FIG. 7, when the packet from general terminal 100b is received by gateway apparatus 300 (400, 401), access control section 302 determines whether or not the destination IP address of the packet is registered in the host list stored in host information storage section 304. Here, the destination IP address of the packet is registered in the host list, and this destination IP address is proven to be an IP address of a general host. Therefore, it is evident that the transmission of the packet from the general terminal to the host of this destination IP address is permitted and an instruction of the packet transmission is transmitted from access control section 302 to transmission/reception section 301 (503). The packet is transferred from transmission/reception section 301 to transmission/reception section 306 according to this instruction (504), and the packet is transmitted from transmission/reception section 306 to the host of the destination IP address in external network 200 (505).

In this way, when the destination IP address of the packet from general terminal 100b is stored in host information storage section 304 of gateway apparatus 300, the packet from general terminal 100b is transmitted to the general host of the destination IP address.

Furthermore, in this embodiment, host information storage section 304 stores the host list of general hosts, and therefore it is possible to improve the access speed when access is made from general terminal 100b to the general host as shown in FIG. 9. That is, there are three combinations of terminal and host where the transmission of a packet is permitted; secure terminal - secure host, secure terminal - general host and general terminal - general host. In the case of the combinations in which the terminal is a secure terminal, access control section 302 refers to the terminal list in terminal information storage section 303 and thereby permits access regardless of the host list. On the other hand, as for the combination of general terminal - general host, when the host list of secure hosts is stored in host information storage section 304, the destination IP address is not registered in the host list, and therefore it is necessary to always perform reverse DNS lookup, and a reverse DNS lookup request is transmitted to dedicated DNS server 200b every time a packet is transmitted. On the other hand, when the host list of general hosts is stored in host information storage section 304 as in the case of this embodiment, and, if access was made to a general host of the transmitting destination in the past, the destination IP address is registered in the host list, and therefore access is permitted without performing reverse DNS lookup.

As described above, according to this embodiment, when the type of the host is not registered, the gateway apparatus performs reverse DNS lookup based on the destination IP address of the packet and inquires whether or not the host of the destination IP address is registered in the DNS server of the external network as a secure host. The host of the destination address is stored in the gateway apparatus as a secure host or a general host based on the inquiring result, and therefore the gateway apparatus can update the host list only about the host to which a packet is to be transmitted when needed, reduce consumption of resources of a memory or the like and efficiently control access to the secure host.

The above-described embodiment has explained the case where host information storage section 304 stores the host list of general hosts, but as described above, host information storage section 304 may also store the host list of secure hosts. Generally, more general hosts are provided in external network 200 than secure hosts, and therefore, by storing the host list of secure hosts, it is possible to further reduce the amount of information of the host list and further reduce consumption of resources of a memory or the like.

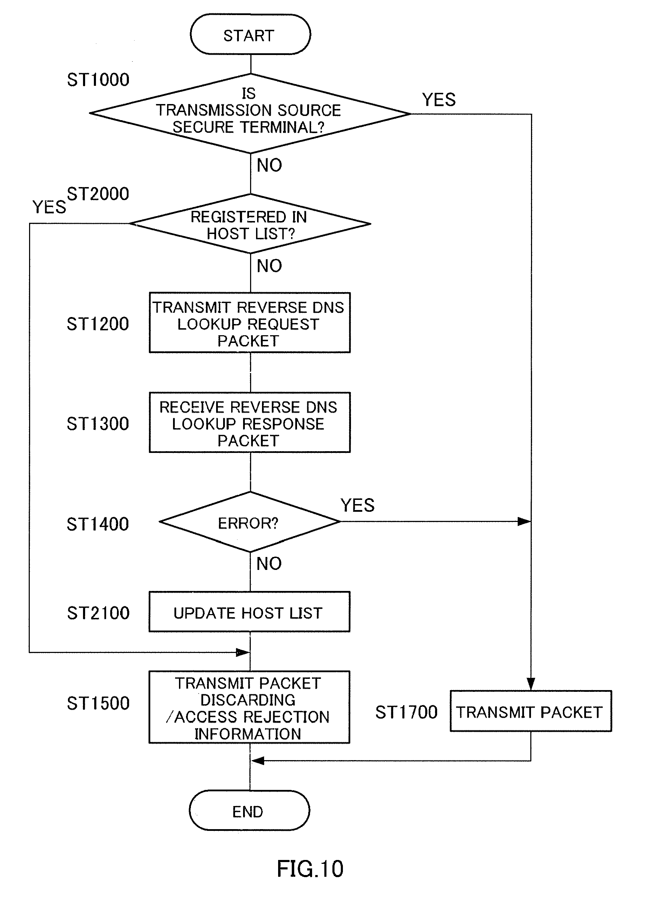

Hereinafter, the operation of access control when host information storage section 304 stores the host list of secure hosts will be explained with reference to the flowchart shown in FIG.10. In FIG.10, components that are the same as those in FIG.6 will be assigned the same reference numerals without further explanations.

First, when a packet transmitted from a terminal in internal network 100 is received by transmission/reception section 301 of gateway apparatus 300, this packet is inputted to access control section 302. Access control section 302 searches the transmission source IP address of the packet from the terminal list of terminal information storage section 303 and determines whether or not the transmission source terminal of the packet is a secure terminal (ST1000). As a result, when the transmission source of the packet is a secure terminal, the packet is transmitted to the host of the destination IP address through transmission/reception section 306 (ST1700).

Furthermore, when the packet transmission source is a general terminal, the destination IP address of the packet is checked with the host list of host information storage section 304, and whether or not the destination of the packet is a secure host is determined (ST2000). That is, when the destination IP address of the packet is already registered in the host list, the destination of this packet is determined to be a secure host. In this case, access from the general terminal in internal network 100 to the secure host in external network 200 is not permitted, and therefore access control section 302 discards the packet stored in transmission/reception section 301 and transmits access rejection information indicating that access has been rejected to the transmission source of the packet through transmission/reception section 301 (ST1500).

On the other hand, when the destination IP address of the packet is not registered in the host list, it is unknown whether the host of this destination IP address is a secure host or a general host, and therefore an instruction is transmitted to reverse DNS lookup request transmission section 3051 so as to transmit a reverse DNS lookup request of the destination IP address. According to this instruction, the reverse DNS lookup request is transmitted from reverse DNS lookup request transmission section 3051, and a reverse DNS lookup response to this reverse DNS lookup request is sent back from dedicated DNS server 200b to reverse DNS lookup response reception section 3052 (ST1200, ST1300).

Reverse DNS lookup response reception section 3052 then determines whether or not the reverse DNS lookup response is an error (ST1400), and, when the reverse DNS lookup response is a hit, the inquired IP address is an IP address of a secure host, and such information is reported to writing control section 3053. Writing control section 3053 newly adds the IP address reported from reverse DNS lookup request transmission section 3051 to the host list of secure hosts stored in host information storage section 304. The host list in host information storage section 304 is updated in this way (ST2100). Moreover, access from a general terminal to a secure host is not permitted, and therefore access control section 302 discards the packet stored in transmission/reception section 301 and transmits access rejection information indicating that access has been rejected to the transmission source of the packet through transmission/reception section 301 (ST1500).

Furthermore, when the decision result in ST1400 shows that the reverse DNS lookup response is an error, the inquired IP address is an IP address of a general host, and access from a general terminal is permitted, and therefore the packet is transmitted through transmission/reception section 306 from transmission/reception section 301 (ST1700).

In this way, even when host information storage section 304 stores the host list of secure hosts, by performing reverse DNS lookup for dedicated DNS server 200b in external network 200, the host list is updated as necessary, and the transmission of the packet is controlled. By this means, it is not necessary for gateway apparatus 300 to store all secure hosts, and it is possible to obtain only information of necessary hosts when needed and reduce consumption of resources of a memory or the like.

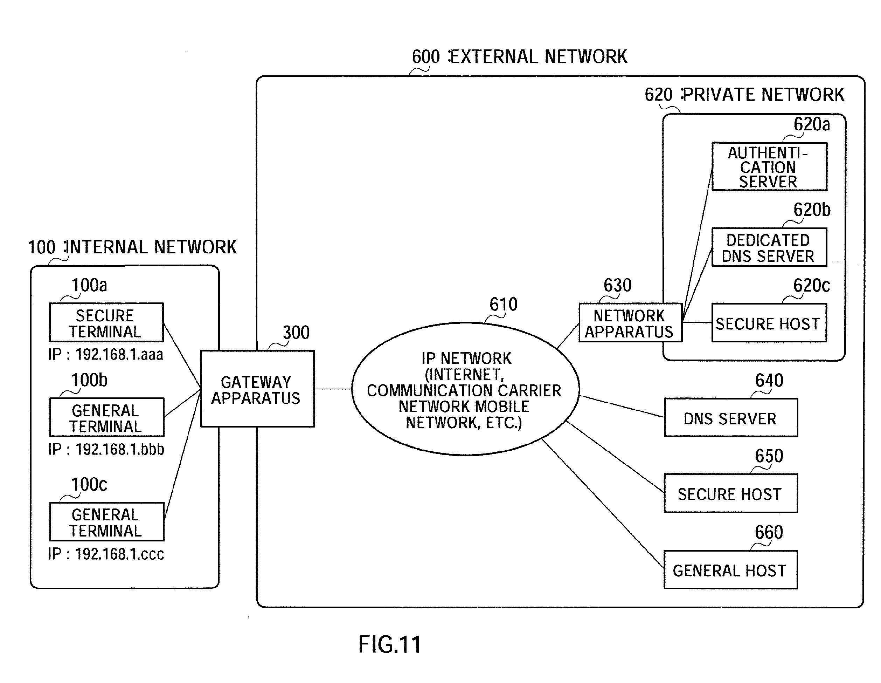

Furthermore, in the above-described embodiment, the network configuration shown in FIG. 2 has been assumed, but the present invention can also be applied to the network configuration as shown, for example, in FIG. 11. That is, as shown in FIG. 11, private network 620 is further formed in external network 600, and the present invention can also be applied when private network 620 is connected to IP network 610 through network apparatus 630.

In the case as shown in FIG.11, gateway apparatus 300 transmits a reverse DNS lookup request to dedicated DNS server 620b in private network 620 and controls access to secure host 620c. Furthermore, as for secure host 650 and general host 660 directly connected to IP network 610, gateway apparatus 300 transmits a reverse DNS lookup request to, for example, DNS server 640 and thereby performs access control. That is, the present invention allows access control of secure hosts provided on an arbitrary network.

Furthermore, in the above-described embodiment, it is also possible to periodically delete the host list stored in host information storage section 304. By so doing, even when the network configuration in external network 200 changes and the IP addresses of the secure host and the general host change, it is possible to always hold a correct host list and also reliably reduce memory consumption.

Furthermore, it is also possible to periodically check the host list stored in host information storage section 304 with the list of secure hosts registered in dedicated DNS server 200b and confirm whether or not the host list is correctly held.

The access control apparatus according to a first aspect of the present invention adopts a configuration, including: a storage section that stores a host list indicating hosts, out of hosts in a first network, access to which is restricted or access to which is not restricted from a terminal in a second network; a reception section that receives a packet whose destination is set to a host in the first network from a terminal in the second network; a control section that controls, when the destination host of the received packet is registered in the host list, whether to transmit the packet to the host or discard the packet; and an updating section that acquires, when the destination host of the received packet is not registered in the host list, information as to whether or not access from the terminal to the host is permitted from outside and updates the host list.

According to this configuration, when the destination of the received packet is registered in the host list, whether to transmit or discard the packet is controlled, and, when the destination of the received packet is not registered in the host list, information of the destination host is acquired from outside and the host list is updated. Therefore, it is possible to create a host list about only necessary destination hosts when needed, reduce consumption of resources of a memory or the like and efficiently control access to secure hosts.

The access control apparatus according to a second aspect of the present invention adopts a configuration in the above-described first aspect, wherein the updating section includes: a reverse DNS lookup request transmission section that inquires whether or not the destination address of the packet is registered in a server in the first network as an address of the host to which access is restricted; a reverse DNS lookup response reception section that receives a reverse DNS lookup response indicating whether or not the destination address is registered in the server; and a writing control section that controls writing into the host list of the destination address according to the reverse DNS lookup response.

According to this configuration, reverse DNS lookup of the destination address is performed on the server in the first network and writing into the host list of the destination address is controlled according to this result, so that it is possible to update the host list correctly by reliably confirming whether the host of the destination address is a secure host or a general host.

The access control apparatus according to a third aspect of the present invention adopts a configuration in the first aspect, wherein, when the destination host of the received packet is not registered in the host list, the control section determines whether to transmit the packet to the host or discard the packet according to the information acquired from outside by the updating section.

According to this configuration, the presence/absence of packet transmission is controlled according to the information obtained from outside as to whether or not access to the destination host is restricted, so that it is possible to correctly perform access control of hosts not registered in the host list.

The access control apparatus according to a fourth aspect of the present invention adopts a configuration in the first aspect, further including a second storage section that stores information as to whether the terminal in the second network is a secure terminal which is permitted to access to all hosts in the first network or a general terminal which is permitted to access to only part of hosts in the first network, wherein, when the transmission source of the received packet is a secure terminal, the control section transmits the packet to the host.

According to this configuration, when the transmission source of the packet is a secure terminal, this packet is transmitted to the host, so that it is possible to exclude unnecessary access control and shorten the time required for access control.

The access control apparatus according to a fifth aspect of the present invention adopts a configuration in the above-described first aspect, wherein the storage section deletes the host list periodically.

According to this configuration, the host list is deleted periodically, so that, even when the network configuration of the first network changes, it is possible to always hold a correct host list and also reliably reduce consumption of a memory.

The access control method according to a sixth aspect of the present invention is an access control method for an access control apparatus that stores a host list indicating hosts, out of hosts in a first network, access to which is restricted or access to which is not restricted from a terminal in a second network, including the steps of: receiving a packet whose destination is set to a host in the first network from a terminal in the second network; controlling, when the destination host of the received packet is registered in the host list, whether to transmit the packet to the host or discard the packet; and acquiring, when the destination host of the received packet is not registered in the host list, information as to whether or not access from the terminal to the host is permitted from outside and updating the host list.

According to this method, when the destination of the received packet is registered in the host list, whether to transmit or discard the packet is controlled, and, when the destination of the received packet is not registered in the host list, information of the destination host is acquired from outside, and the host list is updated. Therefore, it is possible to create a host list about only necessary destination hosts when needed, reduce consumption of resources of a memory or the like and efficiently control access to secure hosts.

The present application is based on Japanese Patent Application No.2004-372230, filed on December 22, 2004, entire content of which is expressly incorporated by reference herein.

### Industrial Applicability

The access control apparatus and the access control method according to the present invention can reduce consumption of resources of a memory or the like and efficiently control access to secure hosts, and are useful as an access control apparatus and an access control method in a network where access from a terminal in an internal network is restricted according to the type of a host in an external network or the like.

## Claims

1. An access control apparatus comprising:
a storage section that stores a host list indicating hosts, out of hosts in a first network, access to which is restricted or access to which is not restricted from a terminal in a second network;
a reception section that receives a packet whose destination is set to a host in the first network from a terminal in the second network;
a control section that controls, when the destination host of the received packet is registered in the host list, whether to transmit the packet to the host or discard the packet; and
an updating section that acquires, when the destination host of the received packet is not registered in the host list, information as to whether or not access from the terminal to the host is permitted from outside and updates the host list.

2. The access control apparatus according to claim 1, wherein the updating section comprises:
a reverse DNS lookup request transmission section that inquires whether or not the destination address of the packet is registered in a server in the first network as an address of the host to which access is restricted;
a reverse DNS lookup response reception section that receives a reverse DNS lookup response indicating whether or not the destination address is registered in the server; and
a writing control section that controls writing into the host list of the destination address according to the reverse DNS lookup response.

3. The access control apparatus according to claim 1, wherein, when the destination host of the received packet is not registered in the host list, the control section determines whether to transmit the packet to the host or discard the packet according to the information acquired from outside by the updating section.

4. The access control apparatus according to claim 1, further comprising a second storage section that stores information as to whether the terminal in the second network is a secure terminal which is permitted to access to all hosts in the first network or a general terminal which is permitted to access to only part of hosts in the first network,
wherein, when the transmission source of the received packet is a secure terminal, the control section transmits the packet to the host.

5. The access control apparatus according to claim 1, wherein the storage section deletes the host list periodically.

6. An access control method for an access control apparatus that stores a host list indicating hosts, out of hosts in a first network, access to which is restricted or access to which is not restricted from a terminal in a second network, the access control method comprising the steps of:
receiving a packet whose destination is set to a host in the first network from a terminal in the second network;
controlling, when the destination host of the received packet is registered in the host list, whether to transmit the packet to the host or discard the packet; and
acquiring, when the destination host of the received packet is not registered in the host list, information as to whether or not access from the terminal to the host is permitted from outside and updating the host list.
